# FASCICULE DE BREVET EUROPEEN

(11) **EP 3 334 033 B1**
(45) Date de publication et mention de la délivrance du brevet: **30.09.2020**
(21) Numéro de dépôt: 17205342.3
(22) Date de dépôt: 05.12.2017
(51) Int. Cl.: H02S 30/10, H02S 40/34

(54) **MODULE PHOTOVOLTAÏQUE ET PANNEAU DE MODULES PHOTOVOLTAÏQUES INTERCONNECTES**
FOTOVOLTAIKMODUL UND PLATTE AUS MITEINANDER VERBUNDENEN FOTOVOLTAIKMODULEN
PHOTOVOLTAIC MODULE AND PANEL OF INTERCONNECTED PHOTOVOLTAIC MODULES

(30) Priorité: 09.12.2016 FR 1662201
(43) Date de publication de la demande: 13.06.2018
(73) Titulaire: Commissariat à l'Energie Atomique et aux Energies Alternatives, 75015 Paris (FR)
(72) Inventeur: LEFILLASTRE, Paul, 75013 PARIS (FR)
(74) Mandataire: Cabinet Camus Lebkiri

(56) Documents cités:
- WO-A1-2013/086265
- DE-U1-212011 100 086
- US-A1- 2012 222 726

## Description

### DOMAINE TECHNIQUE

La présente invention concerne un module photovoltaïque dans lequel la connectique de jonction des cellules photovoltaïques est montée dans le bâti de support du module. L'invention concerne également un panneau photovoltaïque comportant plusieurs modules photovoltaïques interconnectés par l'intermédiaire d'une connectique intermodule montée elle aussi dans le bâti des modules photovoltaïques. L'invention trouve des applications dans le domaine de la production d'énergie électrique et, en particulier, dans le domaine de l'énergie solaire.

### ETAT DE LA TECHNIQUE

Dans le domaine de l'énergie solaire, il est connu d'utiliser des modules photovoltaïques pour transformer les rayonnements solaires en énergie électrique. Un module photovoltaïque comprend une pluralité de cellules photovoltaïques de même type de technologie, adaptées pour transformer les rayonnements lumineux provenant du soleil en énergie électrique.

Dans une cellule photovoltaïque, les porteurs de charge photogénérés, qui contribuent à la génération du courant électrique dans la cellule photovoltaïque, sont collectés grâce à un réseau d'électrodes déposé sur la face de la cellule qui reçoit directement le rayonnement lumineux, appelée face avant. Ces électrodes, appelées également doigts de collecte, sont étroites (<100 µm). Elles sont généralement formées par sérigraphie à l'aide d'une pâte contenant de l'argent. Une cellule photovoltaïque peut être monofaciale ou bifaciale. Dans le cas d'une cellule monofaciale, seule la face avant de la cellule, qui reçoit le rayonnement lumineux, est munie d'un réseau d'électrodes ; la face arrière est généralement recouverte d'une couche métallique pleine. Dans le cas d'une cellule bifaciale, la face avant reçoit le rayonnement lumineux direct (en provenance directe de la source lumineuse) et la face arrière reçoit le rayonnement lumineux réfléchi ; la face avant est alors recouverte d'un premier réseau d'électrodes et la face arrière est recouverte d'un second réseau d'électrodes.

Pour former un module photovoltaïque, les cellules photovoltaïques sont connectées entre elles, en série et/ou en parallèle, afin de collecter l'énergie électrique produite par chacune des cellules. Pour cela, un système d'interconnexion permet de relier plusieurs cellules entre elles pour former une « chaîne » (ou « string » en termes anglo-saxons) et de relier les chaînes entre elles. Le courant électrique circule ainsi d'une cellule à l'autre et d'une chaîne à l'autre via le système d'interconnexion.

Un module photovoltaïque standard comporte par exemple soixante cellules photovoltaïques, de forme carrée ou « pseudo-carrée », de 156 mm de côté, et réparties en six chaînes de dix cellules. Les dix cellules d'une chaîne sont connectées en série. Les six chaînes de cellules sont également connectées en série.

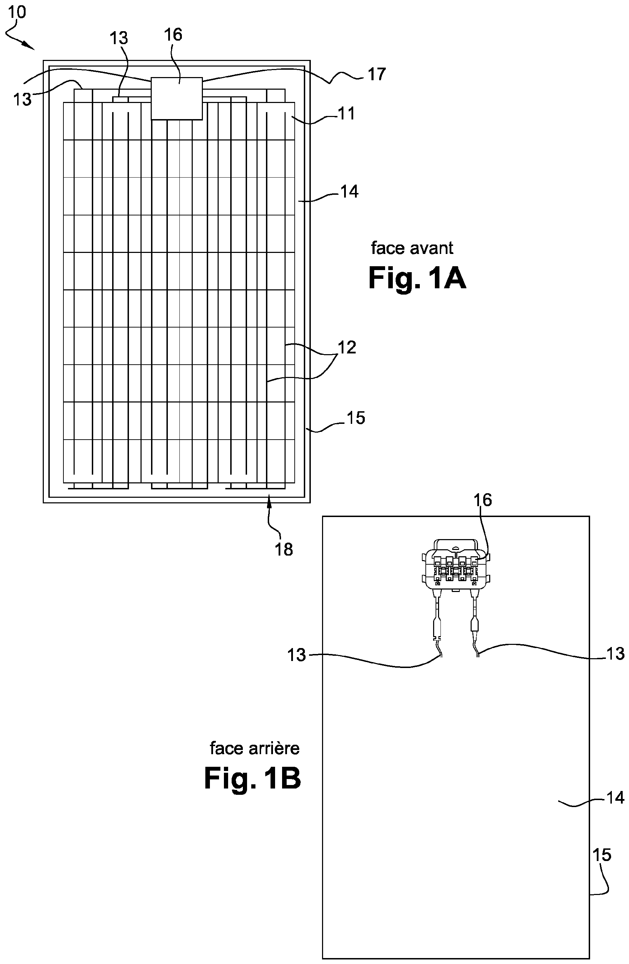

Dans un module photovoltaïque standard, du type de celui représenté sur les figures 1A-1B, le système d'interconnexion comporte un réseau de connexion interne 12 - contenant des rubans ou une pluralité de fils électriques - qui connecte plusieurs cellules photovoltaïques 11 entre elles et forme une chaîne 18 de cellules photovoltaïques. Chaque chaîne 18 de cellules photovoltaïques comporte, à ses extrémités, une ligne de connexion externe 13 qui permet de connecter les chaînes entre elles par l'intermédiaire d'une connectique de jonction. Cette connectique de jonction comporte généralement plusieurs diodes by-pass connectées chacune entre deux chaînes de cellules photovoltaïques. La connectique de jonction, généralement implantée dans un ou plusieurs boîtier(s) de jonction 16, permet également de connecter plusieurs modules photovoltaïques ensemble via des câbles d'interconnexion 17.

Le document WO 2013/086265 A1 décrit un module photovoltaïque comprenant un panneau photovoltaïque et un cadre assemblé autour de la périphérie du panneau, un boîtier de jonction et une ligne de connexion connectée au panneau photovoltaïque. Le boîtier de jonction comporte un corps de boîtier positionné dans un coin du cadre ou dans un segment du cadre.

Les cellules photovoltaïques interconnectées sont généralement encapsulées entre deux couches de protection 14 :
- une couche de protection en verre pour la face avant qui reçoit les rayonnements lumineux et
- une couche de protection, pour la face arrière, en polymère lorsque le module est monofacial ou en verre lorsque le module est bifacial.

L'ensemble constitué des cellules photovoltaïques interconnectées et des couches d'encapsulation et de protection est laminé et appelé ensemble laminé. Cet ensemble laminé est supporté par un cadre métallique 15 qui rigidifie le module et permet sa fixation. Pour des raisons de coût, de légèreté et de résistance à l'humidité, le cadre métallique est généralement en aluminium.

Plusieurs techniques d'implantation des boîtiers de jonction sont connues des fabricants de modules photovoltaïques. Une première technique, représentée sur les figures 1A-1B, propose d'implanter un unique boîtier de jonction 16 sur la face arrière du module photovoltaïque 10. Pour des raisons de résistance et d'isolation électrique, les lignes de connexion externes 13 reliant les chaînes de cellules 18 au boîtier de jonction 16 passent à travers la couche de protection arrière du module. Cette technique ne peut donc être employée que pour un module monofacial.

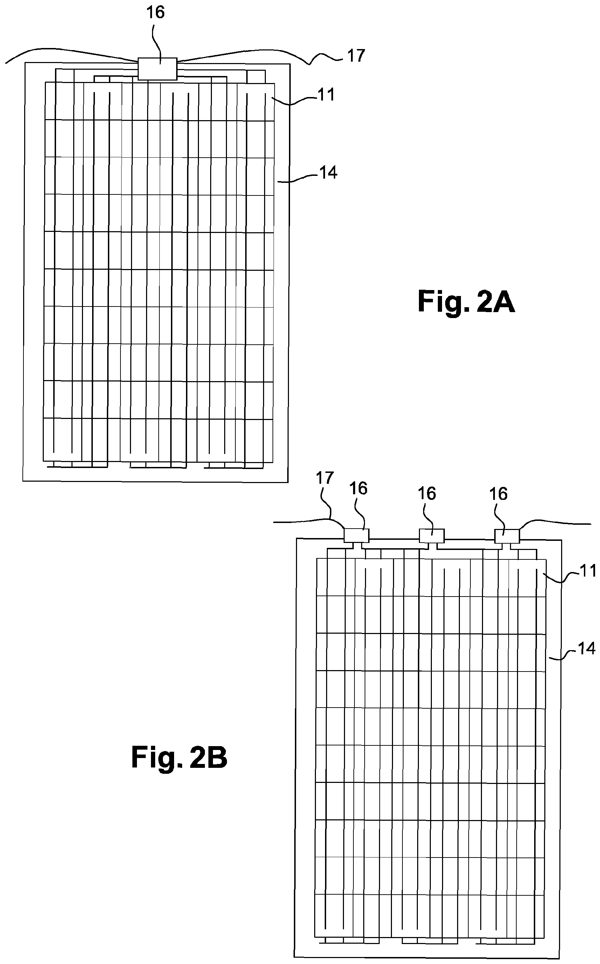

Une autre technique, représentée sur les figures 2A-2B, propose d'implanter un ou plusieurs boîtiers de jonction 16 sur la tranche du module photovoltaïque, c'est-à-dire en dehors de la zone comportant les cellules photovoltaïques 11. Compte tenu de l'emplacement des boîtiers de jonction 16, le module photovoltaïque ne peut comporter aucun cadre de support. La tenue mécanique du module photovoltaïque est donc faible et assurée uniquement par les deux couches de protection. Or, du fait de l'absence de cadre, les couches de protection, en particulier lorsqu'elles sont en verre, sont fragiles et sensibles aux coups.

D'autres techniques proposent d'implanter le ou les boîtiers de jonction sur la couche de protection en verre de la face arrière d'un module photovoltaïque bifacial, en lisière des cellules photovoltaïques, à proximité du cadre. Toutefois, une telle implantation du ou des boîtiers nécessite un usinage de la couche de verre - ce qui entraine un coût de fabrication élevé - et génère un ombrage sur les cellules photovoltaïques qui diminue le rendement énergétique du module.

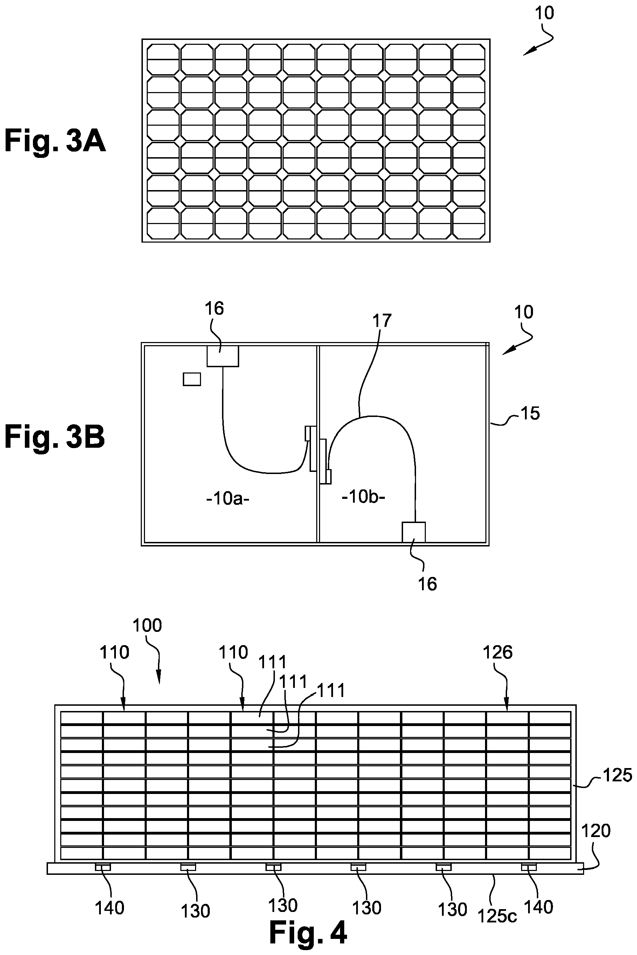

Par ailleurs, pour améliorer les rendements énergétiques, les fabricants de modules photovoltaïques cherchent à diminuer les pertes résistives au sein des modules. Pour cela, il est possible de découper les cellules photovoltaïques d'un module en deux demi-cellules afin de diminuer le courant circulant dans le module et, par conséquent, diminuer les pertes résistives. Les demi-cellules interconnectées forment alors deux demi-modules 10a, 10b. Un exemple d'un module à cellules photovoltaïques découpées 10 est représenté sur les figures 3A-3B. Dans un tel module, soit les chaînes de cellules sont connectées en parallèle deux par deux, comme représenté sur la figure 3B, soit les deux demi-modules sont connectés en parallèle. En conséquence, avec un tel module, le nombre de diodes reliant les chaînes de cellules photovoltaïques est doublé. La connectique de jonction est donc plus volumineuse que dans un module classique, les lignes de connexion externes plus nombreuses et l'interconnexion des cellules photovoltaïques plus complexe à réaliser.

Les fabricants de modules photovoltaïques cherchent, de plus, à réaliser des panneaux photovoltaïques avec des surfaces de plus en plus grandes, notamment pour certaines applications industrielles ou pour des centrales solaires. Pour cela, ils connectent ensemble plusieurs modules photovoltaïques afin d'obtenir un panneau photovoltaïque de grandes dimensions. Dans ce cas, à la complexité de connexion à la connectique de jonction, vient s'ajouter la complexité de connexion à la connectique d'interconnexion entre modules.

Il existe donc un réel besoin d'un module photovoltaïque dans lequel la connectique de jonction de chaque module est facile à connecter et dans lequel l'implantation des boîtiers de jonction ne génère aucun effet néfaste ou contreproductif.

### RESUME DE L'INVENTION

Pour répondre au problème de connectique et d'implantation des boitiers de jonction évoqué ci-dessus, le demandeur propose un module photovoltaïque dans lequel les boîtiers de jonction sont implantés à l'intérieur d'un bâti assurant le support et le maintien du module.

On appelle « bâti » une structure rigide comportant un ou plusieurs montants et/ou traverses et assurant le support et le maintien de l'ensemble laminé formé des cellules photovoltaïques encapsulées entre les couches de protection.

Selon un premier aspect, l'invention concerne un module photovoltaïque comportant :
- une pluralité de cellules photovoltaïques connectées par un réseau de connexion interne de sorte à former plusieurs chaînes de cellules photovoltaïques,
- une pluralité de lignes de connexion externes connectées chacune à au moins une chaîne de cellules photovoltaïques,
- au moins un boîtier de jonction adapté pour connecter les lignes de connexion externes,
- au moins un bâti assurant le support des cellules photovoltaïques et comportant au moins un profilé, au moins partiellement creux, et dont une paroi externe comporte au moins un orifice traversant dans lequel est monté le boîtier de jonction, ledit boîtier de jonction comportant un rebord de protection apte à isoler électriquement les lignes de connexion externes du profilé.

Le boîtier de jonction étant implanté à l'intérieur du bâti, il ne génère aucun ombrage sur les cellules photovoltaïques du module, ce qui permet un rendement énergétique maximal du module.

De plus, le rebord de protection permet d'empêcher tout contact électrique entre la paroi externe du bâti et les lignes de connexion externes afin d'empêcher tout court-circuit.

On appelle « paroi externe » du profilé, une des parois du profilé qui n'est pas en contact avec l'ensemble laminé comportant les cellules photovoltaïques ou en regard des lignes de connexion externes sortant de l'ensemble laminé. Dans le module photovoltaïque selon l'invention, le boîtier étant implanté dans une des parois externes du bâti, un utilisateur peut facilement accéder à la connectique de jonction montée à l'intérieur du boîtier.

De façon avantageuse, plusieurs boîtiers de jonction sont répartis sur une longueur du bâti. De cette façon, la connectique de jonction est répartie sur la longueur du bâti et les lignes de connexion externes sont connectées dans un boîtier de jonction situé à proximité de leur emplacement de sortie de l'ensemble laminé.

De façon avantageuse, le boîtier de jonction comporte au moins une première et une deuxième lumières adaptées pour laisser passer chacune une ligne de connexion externe, les lignes de connexion externes étant connectées ensemble par l'intermédiaire d'au moins un composant de jonction.

Ces première et deuxième lumières permettent de relier facilement les lignes de connexion externes à la connectique de jonction du boîtier.

Le rebord de protection peut être positionné dans le voisinage de ces première et deuxième lumières.

Avantageusement, le bâti comporte, dans sa paroi externe, un logement adapté pour recevoir le rebord de protection du boîtier de jonction.

Avantageusement, le module photovoltaïque de l'invention comporte une connectique intermodule apte à connecter plusieurs modules photovoltaïques ensemble, cette connectique intermodule étant implantée dans le profilé du bâti. Le boîtier de jonction peut alors comporter une troisième lumière adaptée pour laisser passer une ligne d'interconnexion connectant les lignes de connexion externes avec la connectique intermodule.

Cette troisième lumière permet de connecter facilement les lignes de connexion externes avec la connectique intermodule prévue pour connecter plusieurs modules ou ensembles de cellules photovoltaïques ensemble.

Selon un mode de réalisation, le bâti comporte au moins un montant d'un cadre entourant au moins partiellement la pluralité de cellules photovoltaïques.

Selon un autre mode de réalisation, le bâti comporte une traverse positionnée entre deux ensembles de cellules photovoltaïques.

Le bâti pouvant être soit le montant d'un cadre, soit une traverse centrale, il est facile de juxtaposer et de connecter plusieurs modules ensemble. En particulier, plusieurs ensembles de cellules photovoltaïques peuvent être accolés et connectés via une traverse centrale.

Selon un second aspect, l'invention concerne un panneau photovoltaïque comportant au moins deux modules photovoltaïques tels que décrits précédemment, interconnectés par l'intermédiaire d'au moins une connectique intermodule.

Un tel panneau photovoltaïque a l'avantage d'offrir une grande surface photovoltaïque pouvant être utilisée à des fins industrielles ou au sein d'une centrale solaire.

De façon avantageuse, chaque module photovoltaïque comporte au moins un boîtier de jonction comprenant au moins une première et une deuxième lumières adaptées pour laisser passer chacune une ligne de connexion externe et une troisième lumière adaptée pour laisser passer une ligne d'interconnexion connectant les lignes de connexion externes avec la connectique intermodule.

### BREVE DESCRIPTION DES FIGURES

D'autres avantages et caractéristiques de l'invention apparaîtront à la lecture de la description, illustrée par les figures dans lesquelles :
- Les figures 1A et 1B, déjà décrites, représentent schématiquement un premier exemple d'un module photovoltaïque selon l'état de la technique ;
- Les figures 2A et 2B, déjà décrites, représentent schématiquement deux autres exemples d'un module photovoltaïque selon l'état de la technique ;
- Les figures 3A et 3B, déjà décrites, représentent un exemple de module divisé en deux demi-modules selon l'état de la technique ;
- La figure 4 représente une vue de face d'un exemple de module photovoltaïque selon la présente invention ;
- La figure 5 est une vue schématique de face d'une portion d'un module photovoltaïque selon la présente invention ;
- La figure 6 est une vue schématique en coupe d'une portion d'un module photovoltaïque selon la présente invention avec un boîtier de jonction ;
- Les figures 7A-7D sont des vues en perspective d'un boîtier de jonction du module photovoltaïque selon l'invention ;
- La figure 8 est une vue schématique en coupe d'une portion d'un module photovoltaïque de l'invention avec un boîtier d'interconnexion ;
- La figure 9 est une vue de face d'un boîtier d'interconnexion du module photovoltaïque selon l'invention ;
- La figure 10 est une représentation d'un exemple de deux ensembles de cellules photovoltaïques interconnectés par une connectique de jonction implantée dans un le cadre du module photovoltaïque ;
- Les figures 11A-11C sont des représentations d'une traverse équipée d'une connectique de jonction connectant deux ensembles de cellules photovoltaïques d'un module photovoltaïque selon l'invention.

### DESCRIPTION DETAILLEE D'AU MOINS UN MODE DE REALISATION

Un exemple de réalisation d'un module photovoltaïque, dans lequel la connectique de jonction est implantée dans le bâti de support et de maintien, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

Le module photovoltaïque de l'invention comporte une pluralité de cellules photovoltaïques juxtaposées et interconnectées pour former des chaînes de cellules, elles-mêmes connectées les unes aux autres par l'intermédiaire d'une connectique de jonction implantée dans un bâti. La connectique de jonction peut être réunie au sein d'un unique boîtier de jonction. Elle peut également est répartie dans plusieurs boîtiers implantés à plusieurs emplacements du bâti.

Le module photovoltaïque comporte en outre une connectique intermodule nécessaire pour connecter ledit module à un système de distribution électrique et, dans le cas d'un panneau photovoltaïque, pour interconnecter deux ou plusieurs modules photovoltaïques.

Selon l'invention, le bâti comporte un profilé, c'est-à-dire une structure rigide de forme allongée et de section sensiblement constante. Ce profilé est métallique, par exemple en aluminium, et au moins partiellement creux. Le profilé comporte donc au moins quatre parois longitudinales formant une structure linéaire de section carrée ou rectangulaire qui est totalement ou partiellement creuse. Les parties creuses du profilé sont adaptées pour recevoir un ou plusieurs boîtiers de jonction.

Le bâti peut être un cadre entourant l'ensemble laminé. Il peut également être formé d'un seul ou de plusieurs montants du cadre. Selon une variante, le bâti peut aussi être une traverse centrale qui relie deux ensembles de cellules photovoltaïques d'un module photovoltaïque divisé en deux ou qui relie deux modules non cadrés juxtaposés.

Un exemple d'un module photovoltaïque conforme à l'invention est représenté sur la figure 4. Ce module photovoltaïque 100 comporte un ensemble laminé 126, comprenant des rangées 110 de douze cellules photovoltaïques 111, supporté et maintenu par un bâti 120. Dans l'exemple de la figure 4, le bâti 120 est formé par le montant inférieur 125c du cadre 125.

Le bâti 120 du module photovoltaïque 100 de la figure 4 comporte plusieurs boîtiers 130,140 dans lesquels sont montées la connectique de jonction et la connectique d'interconnexion. Dans l'exemple de la figure 4, six boîtiers sont répartis sur la longueur du bâti 120 : les quatre boîtiers les plus au centre du bâti sont des boîtiers de jonction 130 contenant chacun un ou plusieurs composant(s) de la connectique de jonction, appelés composants de jonction. Chaque boîtier de jonction 130 assure une liaison électrique entre des chaînes de cellules photovoltaïques. Les deux boîtiers 140 situés aux extrémités du bâti 120 sont appelés boîtiers d'interconnexion. Ces boîtiers d'interconnexion 140 sont des boîtiers de jonction qui comportent, en plus du/des composants de jonction, des moyens pour relier électriquement les chaînes de cellules photovoltaïques avec la connectique intermodule. Ainsi, chacun de ces boîtiers d'interconnexion 140 comporte un ou plusieurs composant(s) de jonction et des moyens de connexion à la connectique intermodule. Un tel boîtier d'interconnexion 140 permet de diminuer le nombre de boîtiers de jonction et, par conséquent, le coût de fabrication d'un module photovoltaïque.

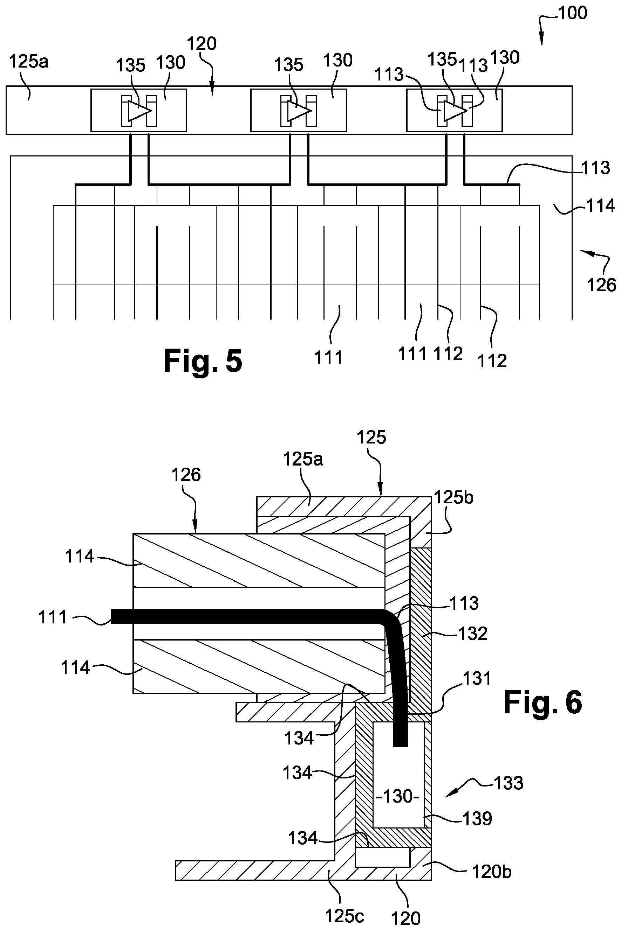

La figure 5 est une représentation d'une portion d'un exemple d'un module photovoltaïque selon la présente invention. Dans cet exemple, le module photovoltaïque 100 comporte des cellules photovoltaïques 111 reliées sous forme de chaînes par des rubans d'interconnexion 112. Chaque ruban d'interconnexion 112 est connecté à une ligne de connexion externe 113 assurant la liaison électrique entre la chaîne de cellules et la connectique de jonction.

Dans l'exemple de la figure 5, le bâti 120 est formé par le montant supérieur 125a du cadre du module. La bâti 120 comporte plusieurs boîtiers de jonction 130 répartis sur la longueur dudit bâti. Chaque boîtier de jonction 130 comporte un ou plusieurs composants de jonction. La connectique de jonction comporte plusieurs diodes by-pass destinées à être connectées chacune entre deux lignes de connexion externes 113. Dans l'exemple de la figure 5, chaque boîtier de jonction 130 abrite une diode by-pass 135 reliant deux lignes de connexion externes 113.

Pour des raisons de simplicité, un boîtier de jonction 130 peut être implanté dans le bâti 120 en regard de deux lignes de connexion externes 113, comme représenté sur la figure 5. Toutefois, pour raisons d'ergonomie, les boîtiers de jonction 130 peuvent aussi être déportés aux extrémités du bâti ou dans un montant du cadre plus éloigné de la sortie des rubans d'interconnexion 112. Dans ce cas, les boîtiers de jonction 130 peuvent ne pas être en regard des sorties des rubans d'interconnexion 112 ; les lignes de connexion externes 113 sont alors prolongées jusqu'aux boîtiers de jonction à travers un joint silicone, un ruban adhésif ou tout autre matériau diélectrique permettant la fixation, sur le bâti 120, de l'ensemble laminé 126.

La figure 6 représente une vue en coupe schématique d'une portion d'un cadre 125 monté autour de l'ensemble laminé 126 comprenant les cellules photovoltaïques encapsulées entre les couches de protection 114. Dans l'exemple de la figure 6, le cadre 125 comporte quatre montants dont seules des portions du montant supérieur 125a, du montant inférieur 125c et d'un montant latéral 125b sont représentées. Dans cet exemple, le bâti 120 est formé du montant inférieur 125c et des montants latéraux 125b. Un boîtier de jonction 130 est représenté à la jonction du cadre inférieur 125c et du cadre latéral 125b. Ce boîtier de jonction 130, comme tous les boîtiers de jonction et les boîtiers d'interconnexion du module selon l'invention, est un contenant, avec ou sans couvercle, fabriqué dans un matériau plastique, tel que le PA (Polyamide), le PPO (Polyphenylene oxide) ou un Composite, par exemple du PA avec des fibres de verre tel que le Zytel© de DuPont, ou dans tout autre matériau diélectrique permettant la fabrication de boîtes. Dans l'exemple de la figure 6, un couvercle 139 est représenté qui a pour rôle de fermer l'ouverture du boîtier.

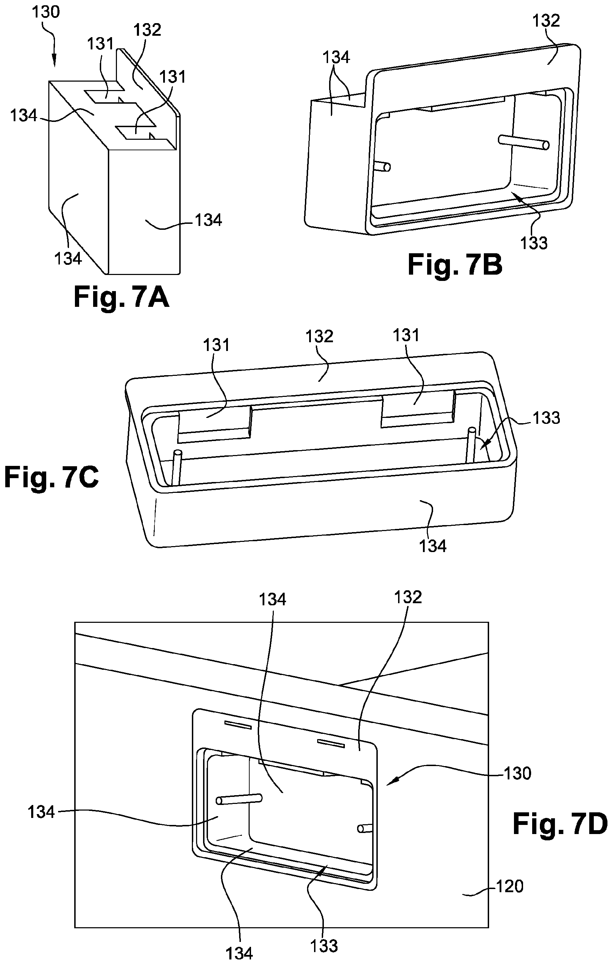

Les figures 7A-7D représentent des vues en perspective d'un exemple de boîtier de jonction 130. Ce boîtier de jonction 130 comporte cinq faces fermées 134 et une face ouverte 133. Les faces fermées 134 sont prévues pour être introduites à l'intérieur du bâti 120 et ont des dimensions adaptées à l'espace libre du profilé du bâti 120. La face ouvertes 133 du boîtier de jonction 130 est en façade du bâti 120, c'est-à-dire qu'elle est prévue pour être alignée avec la face externe de la paroi externe du profilé accessible par l'utilisateur. La face ouverte 133 est la face du boîtier de jonction 130 par laquelle l'utilisateur peut accéder aux extrémités des lignes de connexion externes à connecter avec la/les diodes by-pass 135.

La face ouverte 133 peut être fermée et rendue étanche à l'humidité par un couvercle 139 non visible sur les figures 7A-7D.

Comme représenté sur les figures 6 et 7A-7D, le boîtier de jonction 130 comporte des lumières 131, ou orifices, traversant une des parois fermée 134 du boîtier pour permettre le passage de lignes de connexion externes 113. Une extrémité de chaque ligne de connexion externe 113 est connectée à la sortie de deux rubans d'interconnexion 112 du laminé 126. L'autre extrémité de chaque ligne de connexion externe 113 est insérée, via une des lumières 131, dans le boîtier 130 où elle est connectée, par une diode by-pass, à l'extrémité d'une autre ligne de connexion externe 113. Chaque ligne de connexion externe 113 est ainsi connectée à la ligne de connexion voisine, de sorte que l'ensemble des lignes de connexion externes sont connectées les unes aux autres.

Le boîtier de jonction 130 peut comporter deux lumières 131 de façon à ce que deux lignes de connexion externes 113 soient connectées en série dans le boîtier de jonction 130. Le boîtier de jonction 130 peut aussi comporter trois lumières, ou n lumières, de sorte que trois lignes de connexion externes 113, ou n lignes de connexions externes, soient connectées ensemble par l'intermédiaire de deux, ou n-1, diodes by-pass.

Comme montré sur la figure 6, le boîtier de jonction 130 peut comporter un rebord de protection 132 dans le prolongement de la face ouverte 133. Ce rebord de protection 132 forme une isolation électrique entre la ligne de connexion externe 113, qui est un fil électriquement conducteur par exemple en cuivre, et les parois du bâti 120 qui sont métalliques, par exemple an aluminium. Pour améliorer le rôle de protection du rebord 132, et éviter tout risque de court-circuit entre les lignes de connexion externes 113 et le bâti 120, le rebord 132 est de préférence positionné dans le voisinage des lumières 131 ; le rebord 132 forme ainsi une barrière protectrice entre les lignes de connexion externes 113 et la paroi externe du bâti 120 dans le voisinage des lumières 131.

Comme représenté sur la figure 6, le boîtier de jonction 130 est monté dans le profilé du bâti 120 via un usinage réalisé dans la paroi externe 120a dudit profilé. Dans l'exemple de la figure 6, la paroi externe 120a du profilé est le montant latéral 125b. En effet, selon l'invention, la paroi externe 120a du profilé est usinée de sorte à ce qu'elle comprenne un orifice traversant. Le boîtier de jonction 130 peut ainsi être monté, par cet orifice traversant, à l'intérieur du profilé de façon à ce que sa face ouverte 133 soit alignée avec la paroi externe du profilé. Cet usinage permet en outre de former un logement pour le rebord de protection 132 afin que celui-ci soit inséré dans la structure du bâti et n'entrave pas le passage des lignes de connexion externes 113. L'intérieur du boîtier de jonction 130 est alors accessible, par un utilisateur, depuis l'extérieur du bâti.

Un couvercle 139 est monté devant la face ouverte 133 du boîtier de jonction 130 pour fermer le boîtier de jonction et rendre étanche l'intérieur dudit boîtier 130. Ce couvercle 139 peut être fixé sur le boîtier de jonction 130 par tout moyen de fixation connu dans le domaine des boîtes étanches.

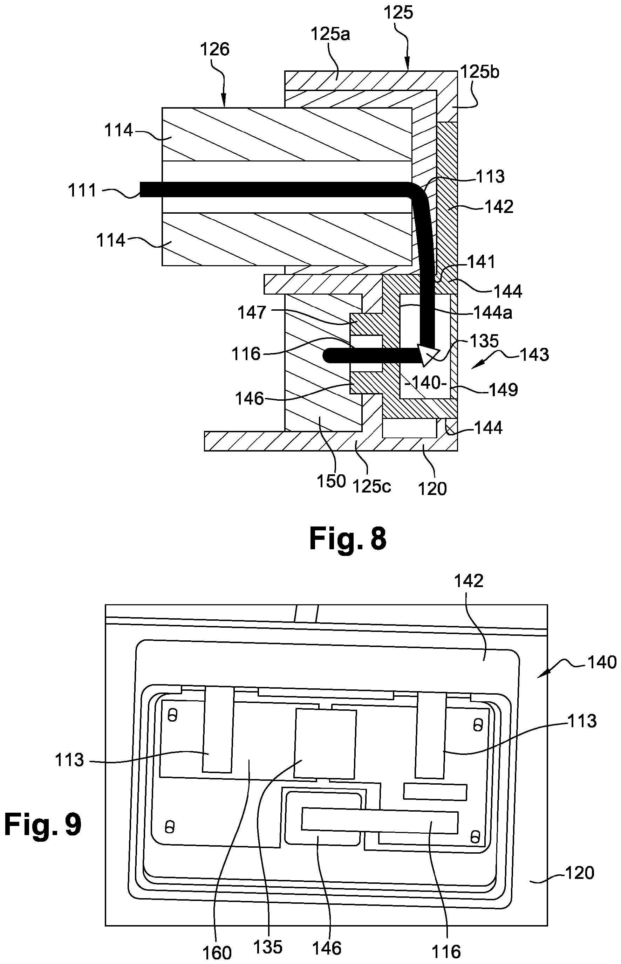

La figure 8 représente une vue en coupe schématique de la portion de cadre montrée sur la figure 6 mais dans laquelle le boîtier de jonction est un boîtier d'interconnexion 140. De façon similaire à la figure 6, le boîtier d'interconnexion 140 est implanté dans le montant latéral 125b du cadre 125 par un usinage dans la paroi externe du profilé et il comporte des première et deuxième lumières 141, un rebord de protection 142 et une face ouverte 143 fermée par un couvercle 149.

Dans l'exemple de la figure 8, le bâti 120 abrite, dans le montant inférieur 125c du cadre, une connectique intermodule 150 adaptée pour connecter le module photovoltaïque 100 avec d'autres modules photovoltaïques. Dans cet exemple, le boîtier d'interconnexion 140 comporte, dans sa paroi arrière 144a, une troisième lumière 146 permettant le passage d'une ligne d'interconnexion 116 reliant la connectique intermodule 150 aux lignes de connexion externes 113 via une diode bypass 135 du boîtier d'interconnexion 140.

Dans ce cas, le boîtier d'interconnexion peut comporter un second rebord de protection ou un tunnel de protection 147 pour isoler électriquement la ligne d'interconnexion 116 des parois du profilé, dans le voisinage de la lumière 146.

Ainsi, comme représenté sur les figures 8 et 9, le boîtier d'interconnexion 140 comporte des première et deuxième lumières 141 permettant l'entrée de deux lignes de connexion externes 113 dans le boîtier 140 et une troisième lumière 146 permettant la sortie d'une ligne d'interconnexion 116 vers la connectique intermodule 150. Le boîtier d'interconnexion 140 comporte en outre une diode by-pass 135 connectée entre les deux lignes de connexion externes et un circuit imprimé 160 sur lequel sont connectés, par exemple par soudage ou clipage, la diode by-pass 135, les lignes de connexion externes 113 et la ligne d'interconnexion 116.

Dans l'exemple de la figure 9, une seule diode by-pass 135 est représentée. L'homme du métier comprendra toutefois que, comme dans l'exemple du boîtier de jonction décrit précédemment, plusieurs diodes by-pass peuvent être connectées lorsque plus de deux lignes de connexion externes 113 sont introduites dans le boîtier d'interconnexion 140.

Comme décrit dans les exemples précédents, un bâti intégrant la connectique de jonction peut être un cadre, ou partie de cadre, monté autour d'un ensemble laminé classique. Le bâti intégrant la connectique de jonction peut également être un cadre, une partie de cadre ou une traverse monté autour ou au-milieu de deux ensembles de cellules photovoltaïques d'un module photovoltaïque divisé en deux.

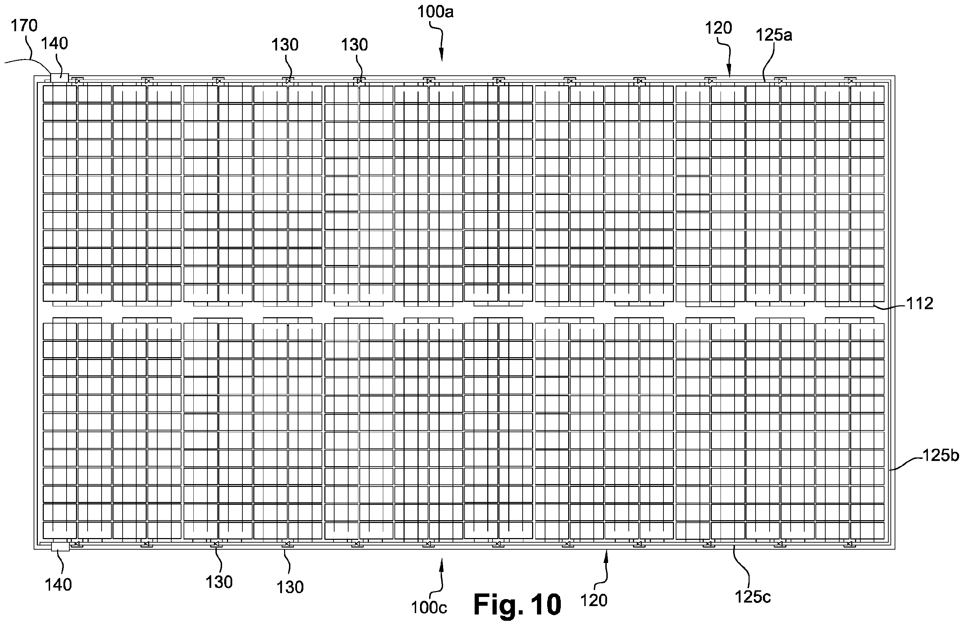

Un exemple d'un module photovoltaïque comportant deux ensembles de cellules photovoltaïques interconnectés 100a, 100c et un cadre 125 contenant la connectique de jonction est représenté sur la figure 10. Dans cet exemple, chacun des deux ensembles de cellules 100a, 100c comporte plusieurs rangées de cellules photovoltaïques 111. Les deux ensembles de cellules 100a, 100c, positionnés l'un à côté de l'autre, sont connectés en parallèle au centre du module et supportés par un seul et même cadre 125. Ce cadre 125 comporte un montant supérieur 125a et un montant inférieur 125c formant le bâti 120 du module photovoltaïque. Chacun de ces montants 125a, 125c abrite plusieurs boîtiers de jonction 130 dans chacun desquels deux lignes de connexion externes sont connectées. Chaque montant 125a, 125c abrite également un boîtier d'interconnexion 140 positionné à l'extrémité du bâti 120. Un fil de connexion 170 symbolise la connexion de chaque ensemble de cellules 100a, 100c vers l'autre ensemble de cellules, respectivement 100c, 100a, ou vers la connectique intermodule.

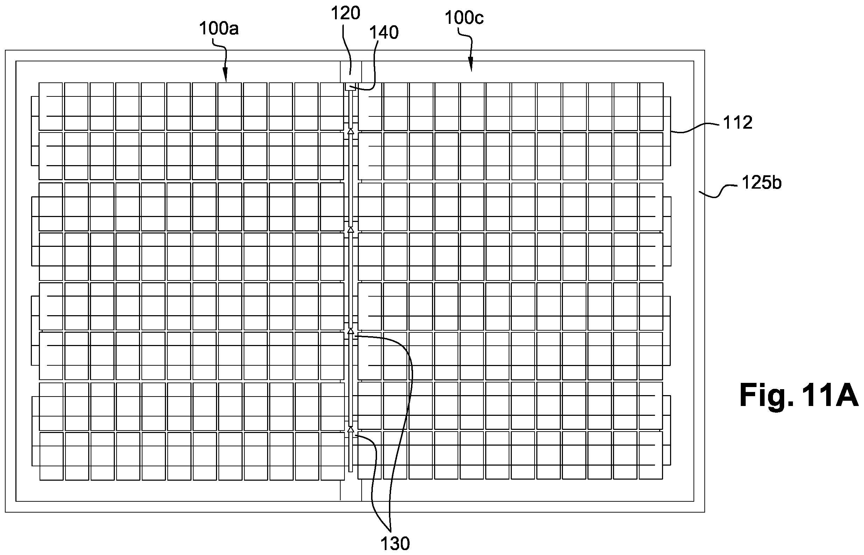

Dans une variante de l'invention, dont un exemple est représenté sur les figures 11A-11C, le bâti 120 est une traverse montée entre les deux ensembles de cellules 100a, 100c d'un module photovoltaïque divisé en deux. Dans cette variante, chaque ensemble de cellules 100a, 100c comporte plusieurs rangées de cellules photovoltaïques 111 interconnectées par des rubans d'interconnexion 112. Les deux ensembles de cellules sont positionnés de part et d'autre de la traverse 120 et les lignes de connexion externes des ensembles de cellules sont connectées en parallèle dans les boîtiers de jonction 130 implantés dans la traverse. Chaque boîtier de jonction peut ainsi assurer, à la fois, la connexion de lignes de connexion externes issues de l'ensemble de cellules 100a et la connexion de lignes de connexion externes issues de l'ensemble de cellules 100c

Dans la variante des figures 11A-11C, un unique boîtier d'interconnexion 140 assure la connexion des lignes de connexion externes des demi-modules 100a, 100c avec une connectique intermodule non représentée sur ces figures.

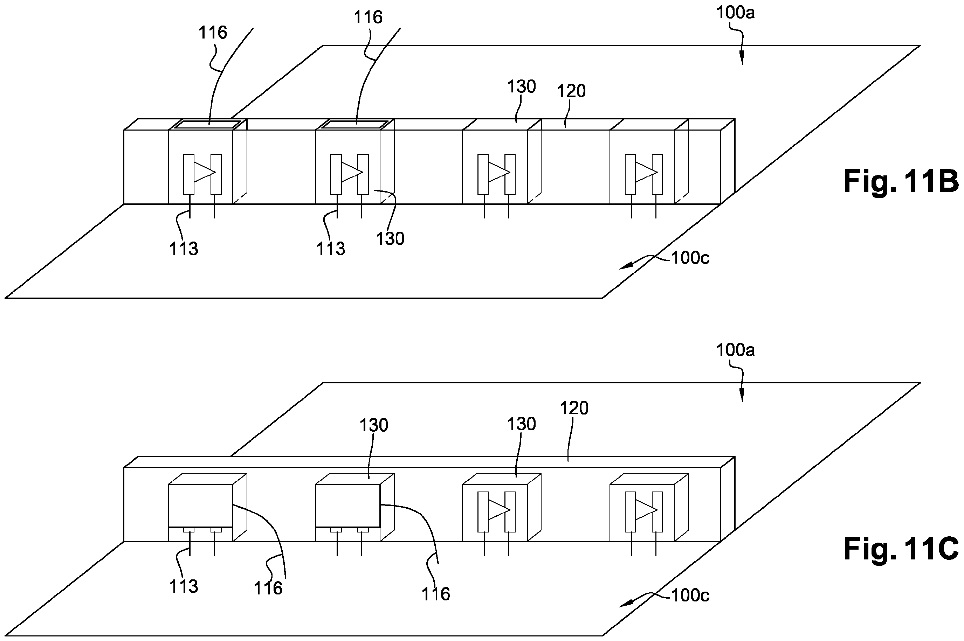

Dans cette variante, les lignes de connexion externes 113 sortent perpendiculairement au plan des ensembles de cellules 100a, 100c. Les boites de jonction 130 sont implantées chacune face à la sortie de deux lignes de connexion externes 113, comme représenté sur les figures 11B et 11C. Selon certains modes de réalisation, la ligne d'interconnexion 116 peut sortir par une paroi du boîtier de jonction parallèle au plan des ensembles de cellules, c'est-à-dire par la paroi longitudinale opposée à la paroi d'entrée des lignes de connexion externes 113, comme montré sur la figure 11B. Selon d'autres modes de réalisation, la ligne d'interconnexion 116 peut sortir par une paroi du boîtier de jonction perpendiculaire au plan des ensembles de cellules 100a, 100c, c'est-à-dire par une paroi latérale dudit boîtier, comme montré sur la figure 11C.

Dans l'exemple représenté sur la figure 11A, la traverse 120 est fixée de part et d'autre sur des montants du cadre 125. La traverse permet alors de renforcer la rigidité du module photovoltaïque 100. Toutefois, l'homme du métier comprendra que la traverse 120 qui vient d'être décrite comme une structure centrale connectant deux ensembles de cellules, peut également être montée entre deux modules photovoltaïques non-cadrés, c'est-à-dire deux modules photovoltaïques n'ayant pas de cadre pour les rigidifier. Dans ce cas, la traverse peut servir de support à deux modules voisins.

Une telle variante où le bâti 120 relie des ensembles de cellules ou des modules non-cadrés permet de réaliser des panneaux photovoltaïques de grandes dimensions, sans ombrage et dont la zone non photovoltaïque (c'est-à-dire sans cellule photovoltaïque) est petite par rapport aux zones photovoltaïques.

Ainsi, la connectique de jonction du module photovoltaïque tel que décrit précédemment permet d'interconnecter plusieurs modules ou ensembles de cellules photovoltaïques sans générer d'ombrage ou de perte de rendement. Cette connectique de jonction est en outre facilement accessible par l'utilisateur depuis l'une des faces extérieures du bâti.

Bien que décrit à travers un certain nombre d'exemples, variantes et modes de réalisation, le module photovoltaïque selon l'invention et le panneau photovoltaïque équipé de plusieurs de ces modules comprennent divers variantes, modifications et perfectionnements qui apparaîtront de façon évidente à l'homme du métier, étant entendu que ces variantes, modifications et perfectionnements font partie de la portée de l'invention, telle que définie par les revendications qui suivent.

## Revendications

1. Module photovoltaïque comportant :
- une pluralité de cellules photovoltaïques (111) connectées par un réseau de connexion interne de sorte à former plusieurs chaînes de cellules photovoltaïques (110),
- une pluralité de lignes de connexion externes (113) connectées chacune à au moins une chaîne de cellules photovoltaïques,
- au moins un boîtier de jonction (130, 140) adapté pour connecter les lignes de connexion externes (113),
- au moins un bâti (120) assurant le support des cellules photovoltaïques (111),
le bâti (120) comporte au moins un profilé, au moins partiellement creux, et dont une paroi externe (120b) comporte au moins un orifice traversant dans lequel est monté le boîtier de jonction, **caractérisé en ce que** le boîtier de jonction (130, 140) comporte un rebord de protection (132) apte à isoler électriquement les lignes de connexion externes (113) du profilé.

2. Module photovoltaïque selon la revendication 1, **caractérisé en ce que** plusieurs boîtiers de jonction (130, 140) sont répartis sur une longueur du bâti.

3. Module photovoltaïque selon la revendication 1 ou 2, **caractérisé en ce que** le boîtier de jonction (130, 140) comporte au moins une première et une deuxième lumières (131) adaptées pour laisser passer chacune une ligne de connexion externe (113), les lignes de connexion externes étant connectées ensemble par l'intermédiaire d'au moins un composant de jonction (135).

4. Module photovoltaïque selon l'une quelconque des revendications 1 à 3, **caractérisé en ce que** le rebord de protection (132) est positionné dans le voisinage des première et deuxième lumières.

5. Module photovoltaïque selon l'une quelconque des revendications 1 à 4, **caractérisé en ce que** le bâti (120) comporte, dans la paroi externe (120a) dudit bâti, un logement adapté pour recevoir le rebord de protection (132) du boîtier de jonction.

6. Module photovoltaïque selon l'une quelconque des revendications 1 à 5, **caractérisé en ce qu'**il comporte une connectique intermodule (150) apte à connecter plusieurs modules photovoltaïques ensemble, cette connectique intermodule étant implantée dans le profilé du bâti.

7. Module photovoltaïque selon la revendication 6, **caractérisé en ce que** le boîtier de jonction (140) comporte une troisième lumière (146) adaptée pour laisser passer une ligne d'interconnexion connectant les lignes de connexion externes avec la connectique intermodule.

8. Module photovoltaïque selon l'une quelconque des revendications 1 à 7, **caractérisé en ce que** le bâti (120) comporte au moins un montant d'un cadre (125) entourant au moins partiellement la pluralité de cellules photovoltaïques.

9. Module photovoltaïque selon l'une quelconque des revendications 1 à 7, **caractérisé en ce que** le bâti (120) comporte une traverse positionnée entre deux ensembles de cellules photovoltaïques.

10. Panneau photovoltaïque comportant au moins deux modules photovoltaïques selon l'une quelconque des revendications 1 à 9, connectés par l'intermédiaire d'au moins une connectique intermodule.

11. Panneau photovoltaïque selon la revendication 10, **caractérisé en ce que** chaque module photovoltaïque comporte au moins un boîtier de jonction (140) comprenant au moins une première et une deuxième lumières (131) adaptées pour laisser passer chacune une ligne de connexion externe et une troisième lumière (146) adaptée pour laisser passer une ligne d'interconnexion connectant les lignes de connexion externes avec la connectique intermodule.

## Patentansprüche

1. Photovoltaisches Modul, umfassend:
- eine Vielzahl von photovoltaischen Zellen (111), die durch ein internes Anschlussnetz derart angeschlossen sind, dass mehrere Ketten aus photovoltaischen Zellen (110) gebildet sind,
- eine Vielzahl von externen Anschlussleitungen (113), die jeweils an wenigstens eine Kette von photovoltaischen Zellen angeschlossen sind,
- wenigstens einen Anschlusskasten (130, 140), der geeignet ist, um die externen Anschlussleitungen (113) anzuschließen,
- wenigstens ein Gestell (120), dass das Unterstützen der photovoltaischen Zellen (111) gewährleistet,
wobei das Gestell (120) wenigstens ein Profil umfasst, das wenigstens teilweise hohl ist, und von dem eine Außenwand (120b) wenigstens eine durchquerende Öffnung umfasst, in der der Anschlusskasten montiert ist, **dadurch gekennzeichnet, dass** der Anschlusskasten (130, 140) einen Schutzrand (132) umfasst, der geeignet ist, die externen Anschlussleitungen (113) des Profils elektrisch zu isolieren.

2. Photovoltaisches Modul gemäß Anspruch 1, **dadurch gekennzeichnet, dass** mehrere Anschlusskästen (130, 140) über eine Länge des Gestells verteilt sind.

3. Photovoltaisches Modul gemäß Anspruch 1 oder 2, **dadurch gekennzeichnet, dass** der Anschlusskasten (130, 140) wenigstens eine erste und eine zweite Öffnung (131) umfasst, die geeignet sind, um jeweils eine externe Anschlussleitung (113) hindurchtreten zu lassen, wobei die externen Anschlussleitungen zusammen mittels wenigstens eines Anschlussbauteils (135) angeschlossen sind.

4. Photovoltaisches Modul gemäß irgendeinem der Ansprüche 1 bis 3, **dadurch gekennzeichnet, dass** der Schutzrand (132) in der Nachbarschaft der ersten und der zweiten Öffnung angeordnet ist.

5. Photovoltaisches Modul gemäß irgendeinem der Ansprüche 1 bis 4, **dadurch gekennzeichnet, dass** das Gestell (120) in der Außenwand (120a) des genannten Gestells eine Aufnahme umfasst, die zum Aufnehmen des Schutzrandes (132) des Anschlusskastens geeignet ist.

6. Photovoltaisches Modul gemäß irgendeinem der Ansprüche 1 bis 5, **dadurch gekennzeichnet, dass** es eine Intermodul-Anschlusstechnik (150) umfasst, die geeignet ist, mehrere photovoltaische Module aneinander anzuschließen, wobei diese Intermodul-Anschlusstechnik in dem Profil des Gestells eingebaut ist.

7. Photovoltaisches Modul gemäß Anspruch 6, **dadurch gekennzeichnet, dass** der Anschlusskasten (140) einen dritten Durchbruch (146) umfasst, der geeignet ist, um eine Vernetzungsleitung hindurchtreten zu lassen, die die externen Anschlussleitungen an die Intermodul-Anschlusstechnik anschließt.

8. Photovoltaisches Modul gemäß irgendeinem der Ansprüche 1 bis 7, **dadurch gekennzeichnet, dass** das Gestell (120) wenigstens einen Pfosten eines Rahmens (125) umfasst, der wenigstens teilweise die Vielzahl von photovoltaischen Zellen umgibt.

9. Photovoltaisches Modul gemäß irgendeinem der Ansprüche 1 bis 7, **dadurch gekennzeichnet, dass** das Gestell (120) einen Querträger umfasst, der zwischen zwei Strukturen aus photovoltaischen Zellen angeordnet ist.

10. Solarpanel, umfassend wenigstens zwei photovoltaische Module gemäß irgendeinem der Ansprüche 1 bis 9, die mittels wenigstens einer Intermodul-Anschlusstechnik angeschlossen sind.

11. Solarpanel gemäß Anspruch 10, **dadurch gekennzeichnet, dass** jedes photovoltaische Modul wenigstens einen Anschlusskasten (140) umfasst, der wenigstens einen ersten und einen zweiten Durchbruch (131) umfasst, der geeignet sind, um jeweils eine externe Anschlussleitung hindurchtreten zu lassen, und einen dritten Durchbruch (146), der geeignet ist, um eine Vernetzungsleitung hindurchtreten zu lassen, die die externen Anschlussleitungen mit der Intermodul-Anschlusstechnik verbindet.

## Claims

1. Photovoltaic module including:
- a plurality of photovoltaic cells (111) connected by an internal connection network in such a way as to form several chains of photovoltaic cells (110),
- a plurality of external connection lines (113) each connected to at least one chain of photovoltaic cells,
- at least one junction box (130, 140) suitable for connecting the external connection lines (113),
- at least one frame (120) providing the support of the photovoltaic cells (111),
wherein the frame (120) includes at least one profile, at least partially hollow, and of which an outer wall (120b) includes at least one through-orifice in which the junction box is mounted, **characterised in that** the junction box (130, 140) includes a protective edge (132) able to electrically insulate the external connection lines (113) from the profile.

2. Photovoltaic module according to claim 1, **characterised in that** several junction boxes (130, 140) are distributed over a length of the frame.

3. Photovoltaic module according to claim 1 or 2, **characterised in that** the junction box (130, 140) includes at least one first and one second holes (131) each suitable for allowing an external connection line to pass (113), the external connection lines being connected together by at least one junction component (135).

4. Photovoltaic module according to any of claims 1 to 3, **characterised in that** the protective edge (132) is positioned in the vicinity of the first and second holes.

5. Photovoltaic module according to any of claims 1 to 4, **characterised in that** the frame (120) includes, in the outer wall (120a) of said frame, a housing suitable for receiving the protective edge (132) of the junction box.

6. Photovoltaic module according to any of claims 1 to 5, **characterised in that** it includes an intermodule connector (150) able to connect several photovoltaic modules together, with this intermodule connector being installed in the profile of the frame.

7. Photovoltaic module according to claim 6, **characterised in that** the junction box (140) includes one third hole (146) suitable for allowing an interconnection line to pass connecting the external connection lines with the intermodule connector.

8. Photovoltaic module according to any of claims 1 to 7, **characterised in that** the frame (120) includes at least one upright of a frame (125) surrounding at least partially the plurality of photovoltaic cells.

9. Photovoltaic module according to any of claims 1 to 7, **characterised in that** the frame (120) includes a crosspiece positioned between two sets of photovoltaic cells.

10. Photovoltaic panel including at least two photovoltaic modules according to any of claims 1 to 9, connected by at least one intermodule connector.

11. Photovoltaic panel according to claim 10, **characterised in that** each photovoltaic module includes at least one junction box (140) including at least one first and one second holes (131) each suitable for allowing an external connection line to pass and a third hole (146) suitable for allowing an interconnection line to pass connecting the external connection lines with the intermodule connector.
